# EUROPEAN PATENT SPECIFICATION

(11) **EP 1 197 513 B1**
(45) Date of publication and mention of the grant of the patent: **30.03.2005**
(21) Application number: 01123372.3
(22) Date of filing: 10.10.2001
(51) Int. Cl.: C08J 3/205, C08J 3/00, C08K 9/10, B01F 3/12

(54) **Process for preparing composite particles**
Verfahren zur Herstellung von Verbundpartikeln
Procédé pour préparer des particules composites

(30) Priority: 10.10.2000 JP 2000309600; 10.08.2001 JP 2001243951
(43) Date of publication of application: 17.04.2002
(73) Proprietor: Kao Corporation, Chuo-Ku Tokyo 103 (JP)
(72) Inventor: Nojiri, Naoki, Wakayama-shi, Wakayama-ken (JP); Imaki, Takuya, Wakayama-shi, Wakayama-ken (JP); Kubo, Hideaki, Wakayama-shi, Wakayama-ken (JP); Nakamura, Hidetake, Wakayama-shi, Wakayama-ken (JP)
(74) Representative: HOFFMANN - EITLE

(56) References cited:
- WO-A-98/37154
- WO-A-98/54397
- WO-A-99/21662
- US-A- 5 714 299
- PATENT ABSTRACTS OF JAPAN vol. 1998, no. 03, 27 February 1998 (1998-02-27) & JP 09 301826 A (KAO CORP), 25 November 1997 (1997-11-25)
- DATABASE WPI Week 9431 Derwent Publications Ltd., London, GB; AN 1994-252688 XP002192363 & JP 06 183946 A (KAO CORP)

## Description

### BACKGROUND OF THE INVENTION

The present invention relates to a process for preparing composite particles. More specifically, the present invention relates to a process for preparing composite particles having controlled properties such as water repellency, oil repellency, optical properties, ultraviolet shielding ability, texture, safety, activity, color tone, stability of dispersion and weatherproof, which can be suitably used for paints, ink-jet ink and cosmetics, and the composite particles obtained.

### Discussion of the Related Art

As a process for carrying out the surface treatment of particles, there has been proposed a process for coating the surface of particles with a coating agent, comprising adding a coupling agent, an alkalizing agent or the like to a suspension of a coating agent, immersing particles to be formed into a core in the suspension, and carrying out the heat treatment of the particles (coating method for wet process). The above process has been generally employed when a silicone compound or a fluorine-containing compound is deposited on the surface of the particles especially for the purpose of imparting water repellency and/or oil repellency to the particles.

However, the process necessitates a step for removing water or an organic solvent which forms the liquid phase, thereby making the preparation process complicated and its preparation cost high.

As another process for coating the particles with a polymer, Japanese Patent Laid-Open Nos. Hei 11-47681 and Hei 11-197494 disclose a process for coating the particles with a polymer such as an acrylic resin, polyethylene or polystyrene by using supercritical carbon dioxide.

However, the process requires an organic solvent as a co-solvent because the polymer is not dissolved only by the use of the supercritical carbon dioxide. Therefore, after the mixture is deposited on the particles through a nozzle to give coated particles, the organic solvent remains in the coated particles, so that the processes necessitate a step for removing the remaining organic solvent from the coated particles by drying.

Also, the process produces particles of a polymer being used as a coating agent, so that heterogeneous particles containing the coated particles and the particles of the polymer may be obtained. When the coated particles have been mixed with the particles of the polymer, the properties of the particles would be changed. For instance, when the shapes and particle diameters of the coated particles are remarkably different from those of the particles of the polymer, properties such as texture, coating ability and lubricity may be impaired in some cases.

An object of the present invention is to provide a process for preparing homogeneous composite particles not containing particles produced from a coating agent in a vessel in a simple process without using an organic solvent harmful to human bodies and a heat treatment.

These and other objects of the present invention will be apparent from the following description.

### SUMMARY OF THE INVENTION

According to the present invention, there is provided a process for preparing composite particles comprising particles and an organic compound in a vessel, comprising the steps of:
(a) contacting particles with an organic compound in the presence of supercritical carbon dioxide in the vessel; and
(b) reducing the internal pressure of the vessel, by exhausting carbon dioxide from the vessel, wherein the internal temperature of the vessel is not less than the critical temperature of carbon dioxide.

### BRIEF DESCRIPTION OF THE DRAWINGS

Figure 1 is a schematic view showing one embodiment of an apparatus used for the process of the present invention;
Figure 2 is a scanning electron microscopic photograph showing a particle structure of composite particles obtained in Example 1;
Figure 3 is a scanning electron microscopic photograph showing a particle structure of mica particles used in Example 1;
Figure 4 is a scanning electron microscopic photograph showing a particle structure of composite particles obtained in Example 2;
Figure 5 is a scanning electron microscopic photograph showing a particle structure of talc particles used in Example 2;
Figure 6 is a scanning electron microscopic photograph showing a particle structure of composite particles obtained in Example 3;
Figure 7 is a scanning electron microscopic photograph showing a particle structure of a powdery substance obtained in Comparative Example 1;
Figure 8 is a scanning electron microscopic photograph showing a particle structure of titanium dioxide particles used in Example 4;
Figure 9 is a scanning electron microscopic photograph showing a particle structure of composite particles obtained in Example 4;
Figure 10 is a scanning electron microscopic photograph showing a particle structure of titanium dioxide particles used in Example 5;
Figure 11 is a scanning electron microscopic photograph showing a particle structure of composite particles obtained in Example 5; and
Figure 12 is a scanning electron microscopic photograph showing a particle structure of composite particles obtained in Comparative Example 2.

### DETAILED DESCRIPTION OF THE INVENTION

The "composite particles" as referred to herein are composite particles in which a part or the whole of particles are covered with an organic compound or included in the organic compound, or composite particles in which an organic compound is present in the internal or the surface of aggregated particles.

The "particles" as referred to herein are particles which do not form a film when the supercritical carbon dioxide is removed from a dispersion of the particles in supercritical carbon dioxide. More specifically, the particles are those not dissolved in supercritical carbon dioxide, and the shapes and forms of the particles are not changed when the supercritical carbon dioxide is removed from the dispersion.

On the other hand, the term "organic compound" as referred to herein is an organic compound which forms a film when the organic compound is dispersed or dissolved in supercritical carbon dioxide, and thereafter the supercritical carbon dioxide is removed from the dispersion or solution. More specifically, the "organic compound" is an organic compound which changes its shape or form in the supercritical carbon dioxide. The form of the organic compound upon use is not limited to specified ones. The form of the organic compounds includes, for instance, masses, particles, granules, liquid. Among these forms, the particles and the granules are preferable.

One of the great features in the present invention resides in the following points.

Carbon dioxide is generally non-toxic, and its critical temperature is 304.2 K. The supercritical carbon dioxide refers to carbon dioxide having a temperature not less than the critical temperature and a pressure not less than the critical pressure. The supercritical carbon dioxide has a property such that its density is drastically changed by a slight pressure change. Therefore, when the pressure of the supercritical carbon dioxide having a slightly exceeding critical pressure and critical temperature is increased, the density of the vapor phase dramatically increases, so that the solubility of a solute in carbon dioxide dramatically increases within a range of pressures exceeding the critical pressure. To the contrary, when the pressure of the supercritical carbon dioxide is reduced, the solubility of a solute in carbon dioxide dramatically decreases, so that the separation of the solute from the supercritical carbon dioxide can be carried out only by reducing the pressure.

The temperature at which the supercritical carbon dioxide is contacted with the particles and the organic compound is preferably 308 to 373 K, more preferably 313 to 353 K, from the viewpoints of efficiently removing the supercritical carbon dioxide and efficiently reducing the pressure. In addition, the initiative pressure of the supercritical carbon dioxide is preferably 7.2 to 50 MPa, more preferably 10 to 40 MPa when the reducing of pressure is initiated, from the viewpoint of efficiently reducing the pressure of the supercritical carbon dioxide.

The term "reducing pressure" as referred to herein means lowering of the pressure of supercritical carbon dioxide.

As mentioned above, when the supercritical carbon dioxide is used, there are some advantages such that the procedures can be carried out at low temperatures, so that the procedures can be facilitated, and that the production costs can be reduced since carbon dioxide is non-toxic and inexpensive.

The supercritical carbon dioxide can increase the solubility of the organic compound higher than the liquefied carbon dioxide.

Thus, a mixture of the supercritical carbon dioxide with the particles and the organic compound (hereinafter referred to as "mixture C") is obtained. The mixture of the supercritical carbon dioxide with the organic compound may become transparent depending upon conditions such as temperatures and pressures. The mixture which becomes transparent is preferable because the mixture contains little aggregated particles and gives a homogeneous formed coating film of the organic compound.

Next, the supercritical carbon dioxide or liquefied carbon dioxide is removed from the mixture C.

After the preparation of the mixture C in a vessel, an exhaust valve of the vessel is opened to reduce the internal pressure of the vessel. As a result, composite particles can be obtained in the vessel.

The solvent-free composite particles can be obtained in a vessel without a solvent and a heat treatment.

The time period required for reducing the internal pressure of the vessel to an atmospheric pressure is not limited to specified ones. The time period is preferably 2 seconds to 120 minutes, more preferably 5 seconds to 60 minutes, from the viewpoints of controlling the particle size of the resulting composite particles and the thickness of the film of the organic compound, and suppressing the formation of the organic compound particles.

The method for reducing the pressure is not limited to specified ones. The reducing of pressure is carried out at a temperature of not lower than the critical temperature (304.2 K) of carbon dioxide, from the viewpoints of preventing the liquefaction of carbon dioxide and suppressing the aggregation, although the temperature would be lowered by the adiabatic expansion during reducing the pressure. The reason why the above method is preferable is that if the reducing of pressure is carried out at a temperature lower than the critical temperature of the carbon dioxide, the organic compound being dissolved or dispersed in the carbon dioxide would be aggregated on and deposited to the surface of particles, and the resulting composite particles would be aggregated by the resulting liquefied carbon dioxide due to capillary phenomenon when the liquefied carbon dioxide is evaporated.

As the particles, any of inorganic particles and organic particles which are not substantially dissolved in supercritical carbon dioxide can be used.

The materials used for the inorganic particles include, for instance, titanium oxide, silica, mica, talc, kaolin, sericite, zinc oxide, magnesium oxide, zirconium oxide, calcium carbonate, magnesium carbonate, magnesium silicate silicic anhydride, barium sulfate, iron red oxide, yellow iron oxide, black iron oxide, carbon black, manganese violet, titanium-coated mica, glass beads, zeolite, composites thereof. These materials can be used alone or in admixture of not less than two kinds. In addition, the surface of the particles may be subjected to a surface treatment such as silicone treatment or fluorine treatment.

The organic particles include organic pigments, organic powders made of polymers.

The organic pigment includes, for instance, Red 201, Red 202, Red 204, Red 226, Orange 204, Yellow 205, Red 404, Red 405, Orange 401, Yellow 401, Blue 404. The polymer includes, for instance, particles of an organic polymer selected from the group consisting of thermoplastic resins such as styrenic resins, acrylic resins, polyolefins, nylons, silicone resins, fluorocarbon resins, polyesters and polyamides, and thermosetting resins such as epoxy resins, phenolic resins and urethane resins. These polymers can be used alone or in admixture of not less than two kinds. In addition, the surface of the particles may be subjected to a surface treatment such as silicone treatment or fluorine treatment.

The average particle diameter of the particles before the formation of composite particles is not limited to specified ones. It is desired that the average particle diameter is 0.01 to 500 µm, preferably 0.02 to 100 µm, more preferably 0.04 to 50 µm. Among them, at least one particle selected from the group consisting of mica, talc and barium sulfate, the average particle diameter of which is 0.01 to 500 µm, is preferable.

In addition, particles A, particles B having an average particle diameter of 1/5 or less times as large as the average particle diameter of the particles A, and the organic compound are contacted with each other in the presence of supercritical carbon dioxide in the vessel, and the supercritical carbon dioxide is removed therefrom, to form composite particles in which the particles B and the organic compound are deposited on the surface of the particles A.

Each of the particles A and the particles B can be used alone or in admixture of at least two kinds. The particles having a particle diameter as large as exceeding one-fifth of the largest average particle diameter of all particles are defined as the particles A. The particles having a particle diameter as large as one-fifth or less of the largest average particle diameter of all particles are defined as the particles B.

In accordance with the uses of the resulting composite particles, desired properties such as water repellency, oil repellency, optical properties, ultraviolet shielding ability, texture, safety, activity, color tone, stability of dispersion and weatherproof can be imparted to the composite particles.

When the particles comprising the particles A and the particles B are used as the above particles, the average particle diameter of the particles A is not limited to specified ones. The average particle diameter of the particles A is preferably 0.1 to 500 µm, more preferably 0.5 to 200 µm, from the viewpoint of depositing the particles B and the organic compound on the surface of the particles A.

The average particle diameter of the particles B is not more than 1/5 times, preferably not more than 1/10 times, more preferably not more than 1/20 times, as large as the average particle diameter of the particles A, from the viewpoint of depositing the particles B on the surface of the particles A. Also, the average particle diameter of the particles B is preferably 0.01 to 100 µm, more preferably 0.01 to 40 µm, still more preferably 0.01 to 20 µm, from the viewpoints of depositing the particles B on the surface of the particles A and giving the particles excellent texture.

The average particle diameter is calculated from the particle diameter distribution determined by a laser diffraction/scattering method.

The weight ratio of the particles A to the particles B (particles A/particles B) is preferably 1/10 to 200/1, more preferably 1/1 to 10/1, from the viewpoint of depositing the particles B on the surface of the particles A.

As described above, the organic compound may be those which are dispersible or dissolvable in the supercritical carbon dioxide. Representative examples of the organic compound include silicone compounds, fluorine-containing compounds, chitosan, Nε-lauroyl-L-lysine. Among them, the silicone compounds and the fluorine-containing compounds are preferable, from the viewpoint of appropriately controlling the surface properties. Among the organic compounds, polymers can be suitably used.

The polymer may be those which are dissolvable or dispersible in the supercritical carbon dioxide. Among the organic polymers, generally used polymers such as an acrylic resin, polyethylene or polystyrene are undissolvable in the supercritical carbon dioxide. On the other hand, a fluorine-containing polymer and a silicone polymer generally have a low intermolecular force, so that these polymers have properties of being easily dissolvable or dispersible in the supercritical carbon dioxide. Therefore, when at least one of the fluorine-containing polymer and the silicone polymer is used, a co-solvent may not be required at all, or the co-solvent can be used in a small amount. Therefore, the composite particles can be prepared without taking the residue of the co-solvent into consideration.

Also, there has been reported that an ether-carbonate copolymer is well dissolved in supercritical carbon dioxide.

The fluorine-containing polymer may be any polymer having a fluorine atom. It is desired that the content of the fluorine atom in the fluorine-containing polymer is 9 to 80% by weight, preferably 20 to 70% by weight, more preferably 40 to 65% by weight. Among the fluorine-containing polymers, a (meth)acrylate polymer having a fluoroalkyl group, a (meth)acrylate polymer having a perfluoroalkyl group, a (meth)acrylate having a fluoroalkyl group-long chain alkyl (meth)acrylate copolymer, and a (meth)acrylate having a perfluoroalkyl group-long chain alkyl (meth)acrylate copolymer are preferable, from the viewpoint of facilitating the dispersion or dissolution of the fluorine-containing polymer in carbon dioxide.

Furthermore, as the fluorine-containing polymer, homopolymers of (meth)acrylate having a perfluoroalkyl group, a poly-fluoroalkyl group, or a perfluoropolyether group, having not less than 4 carbon atoms; and copolymers of this compound with (meth)acrylate having an alkyl group of 8 to 22 carbon atoms are most preferable, from the viewpoint of easily dispersing or dissolving the fluorine-containing polymer in carbon dioxide.

The weight-average molecular weight of the fluorine-containing polymer is preferably 3000 to 500000, more preferably 5000 to 300000, from the viewpoints of being easily dispersed or dissolved in carbon dioxide and being solid at 25°C.

. The silicone polymer is not limited to specified ones, and it may be those which are dissolvable or dispersible in supercritical carbon dioxide alone, or a mixture of supercritical carbon dioxide with a co-solvent.

Among the silicone polymers, methyl polysiloxane, dimethyl polysiloxane, cyclic dimethyl polysiloxane, methylphenyl polysiloxane, methylhydrogen polysiloxane, cyclic methylhydrogen polysiloxane, dimethyl siloxane-methyl (polyoxyethylene)siloxane copolymers, dimethyl siloxane-methyl (polyoxypropylene)siloxane copolymers, polyether-modified silicones, methylstyryl-modified silicones, alkyl-modified silicones, fluorine-modified silicones, higher fatty acid ester-modified silicones, higher alkoxy-modified silicones, silicone-modified acrylic resins, are preferable, from the viewpoints of being easily dispersible in carbon dioxide and easily adsorbable to the particles. The silicone polymer is especially preferably a silicone polymer having an organopolysiloxane molecular chain and a poly(N-acylalkyleneimine) molecular chain having a repeating unit represented by the formula (III): 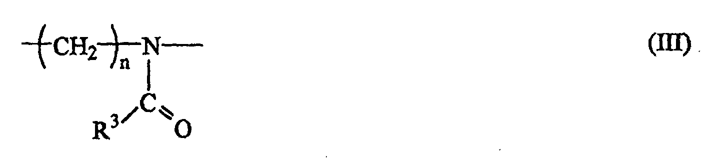 wherein R³ is hydrogen atom, an alkyl group having 1 to 22 carbon atoms, a cycloalkyl group having 3 to 8 carbon atoms, an aralkyl group having 7 to 10 carbon atoms or an aryl group having 6 to 10 carbon atoms; and n is 2 or 3, in which the poly(N-acylalkyleneimine) molecular chain is bonded to at least one of the end and the side chain of the organopolysiloxane molecular chain via a group represented by the formula (I): 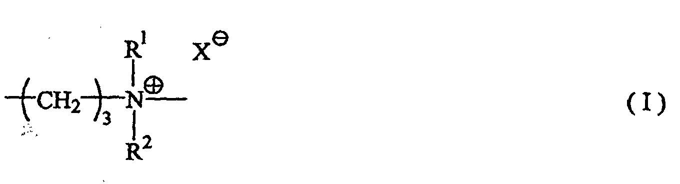 wherein each of R¹ and R² is independently hydrogen atom, an alkyl group having 1 to 18 carbon atoms or an aryl group having 6 to 10 carbon atoms; X⁻ is a counter ion of a quaternary ammonium salt, such as a halogen ion such as Cl⁻ or Br⁻, or a sulfate ion such as CH₃SO₄⁻ or CH₃CH₂SO₄⁻; or a group represented by the formula (II): 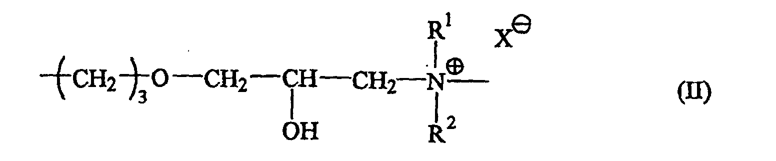 wherein R¹, R² and X⁻ are the same as defined above,
the weight ratio of the poly(N-acylalkyleneimine) molecular chain / the organopolysiloxane molecular chain is 1/50 to 50/1, and the weight-average molecular weight is 500 to 500000, from the viewpoint of facilitating dispersion or dissolution in carbon dioxide. For instance, there can be cited a γ-(N-propionylpolyethyleneimino)aminopropyl methyl siloxane / dimethyl siloxane copolymer, in which each of R¹ and R² is hydrogen atom respectively, and X⁻ is CH₃CH₂SO₄⁻ in the formula (I), and R³ is CH₂CH₃, and n is 2 in the formula (III).

The weight-average molecular weight of the silicone polymer is preferably 500 to 500000, more preferably 1000 to 300000, from the viewpoints of being easily dispersed or dissolved in carbon dioxide.

In the organic compound and the particles being dissolved or dispersed in the supercritical carbon dioxide or liquefied carbon dioxide, the amount of the particles is 0.001 to 1000 parts by weight, preferably 0.005 to 500 parts by weight, more preferably 0.7 to 500 parts by weight, based on 1 part of the organic compound. It is preferable that the organic compound is dissolved in supercritical carbon dioxide, from the viewpoint of homogeneously coating the surface of the particles with the organic compound.

The content of the particles in the mixture C is not limited to specified ones. It is desired that the content of the particles in the mixture C is 0.01 to 70% by weight, preferably 0.1 to 50% by weight, from the viewpoint of improvement of dispersibility in the mixture.

When the organic compound is not easily dissolved or dispersed in supercritical carbon dioxide, the organic compound can be dissolved or dispersed in the supercritical carbon dioxide by mixing a co-solvent with the supercritical carbon dioxide.

As the co-solvent, polar solvents are preferable. Among the polar solvents, alcohol and water which are thought to be almost harmless to human bodies are preferable. As the alcohol, ethanol and 1-propanol are preferable, and ethanol is more preferable.

As described above, since a heat treatment is not required in the process of the present invention after coating the particles as in conventional wet process, the number of treatment steps can be diminished. Therefore, the process of the present invention is very excellent in operability

According to the procedures described above, composite particles of the organic compound and the particles are obtained. The composite particles may contain a third component other than the organic compound and the particles. The third component includes a stabilizer, a colorant and the like other than the coating components of the particles. The third component can be used alone or in admixture of not less than two kinds. The third component can be incorporated into the composite particles by dissolving or dispersing the third component in the supercritical carbon dioxide.

The average particle diameter of the resulting composite particles cannot be absolutely determined because it differs depending upon the amount of the organic compound. It is desired that the average particle diameter is preferably 0.01 to 1000 µm, more preferably 0.02 to 500 µm, still more preferably 0.04 to 100 µm.

The vessel used in the present invention is not limited to its shape and size, as long as the vessel is durable to operating temperatures and pressures. As the vessel, anything which has an exhaust mechanism such as a valve for reducing pressure can be employed. In addition, in order to dissolve or disperse the organic compound and the particles in carbon dioxide, a vessel equipped with a stirring mechanism is preferable. Representative examples of the vessel include autoclave, pressure proof cell.

Before the particles are introduced into the vessel, the particles may be stirred, or pulverized by applying a shearing stress to the particles. Also, when the particles comprise not less than two kinds of particles, the particles can be introduced into the vessel after the particles are pulverized and mixed with each other.

When the resulting composite particles are aggregated, the composite particles may be appropriately subjected to pulverization, or disintegration.

### EXAMPLES

### Example 1

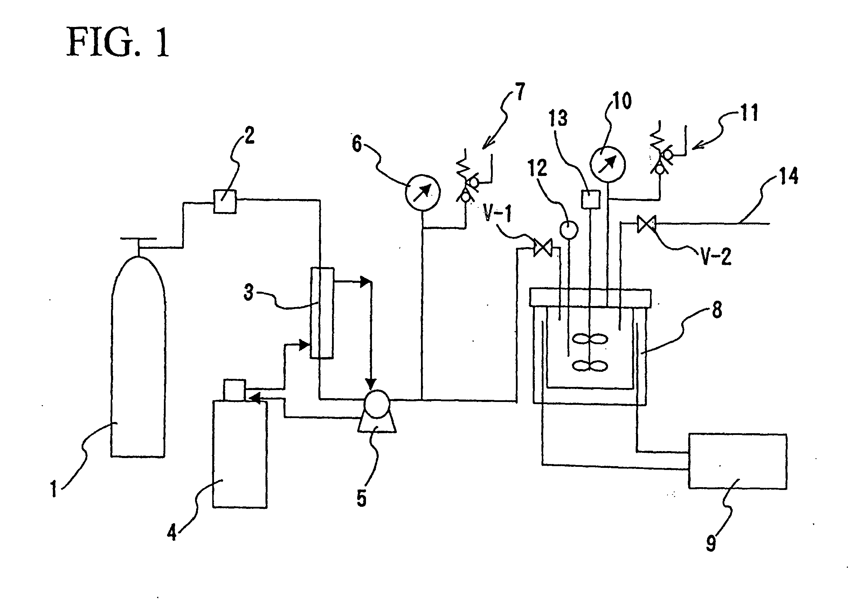

An apparatus shown in Figure 1 was used. The apparatus has been used for a process for preparing composite particles, using reduced-pressure expansion of carbon dioxide.

An autoclave 8 having a volume of 96 mL, commercially available from Taiatsu Garasu Kogyo K.K. was charged with 1.8 g of a granular stearyl methacrylate-2-(perfluorooctyl)ethyl methacrylate copolymer (weight ratio of stearyl methacrylate : 2-(perfluorooctyl)ethyl methacrylate = 1:9) having a particle diameter of 1 to 5 mm, and 6 g of mica having an average particle diameter of 10 µm commercially available from K.K. Yamaguchi Ummo Kogyosho.

Thereafter, carbon dioxide was discharged from a bomb 1, and impurities incorporated in the carbon dioxide were removed by a filter 2. The carbon dioxide was condensed with a condenser 3 through which a refrigerant having a temperature controlled to -5°C was flowing. The refrigerant was provided from a cooler 4. The pressure of the carbon dioxide was increased by a pressure-up pump 5 having a cooled pump head. The pressure of the carbon dioxide was measured by a pressure gauge 6. In order to ensure the safety, a safety valve 7 was provided at the bottom portion of the pressure gauge 6.

The carbon dioxide was introduced into an autoclave 8 having a safety valve 11 through a valve V-1. The temperature of the autoclave 8 was controlled by a cartridge heater 9, and the temperature and the pressure in the autoclave were monitored by a thermometer 12 and a pressure gauge 10. The temperature and the pressure in the autoclave were controlled to 323.15 K and 20 MPa.

Under the above conditions, a stirrer 13 was rotated for 0.5 hours to dissolve and disperse the mixture.

An exhaust valve V-2 was gradually opened, and the carbon dioxide was exhausted from an exhaust line 14 having an inner diameter of 2.5 mm for 2 minutes. Although the temperature inside the autoclave was lowered due to adiabatic expansion under reduced pressure, the pressure was reduced with maintaining the temperature inside the autoclave to a temperature of not less than 313.15 K.

When the vessel pressure inside the autoclave 8 was reduced to an atmospheric pressure, powdery substances were obtained in the autoclave 8. However, no granular substances having a particle diameter of 1 to 5 mm were found therein.

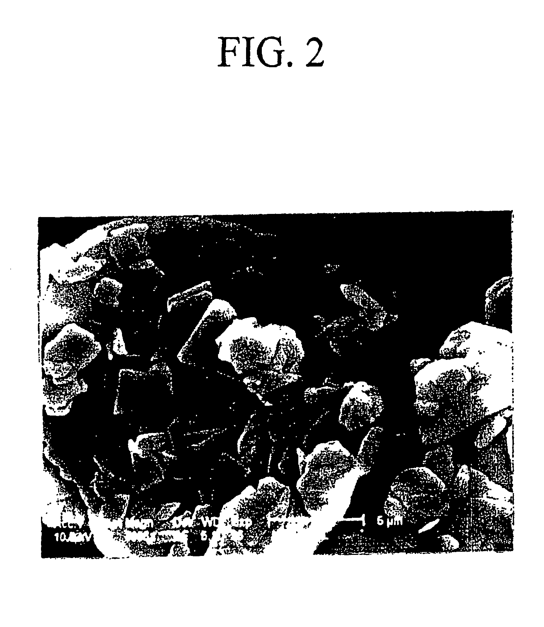

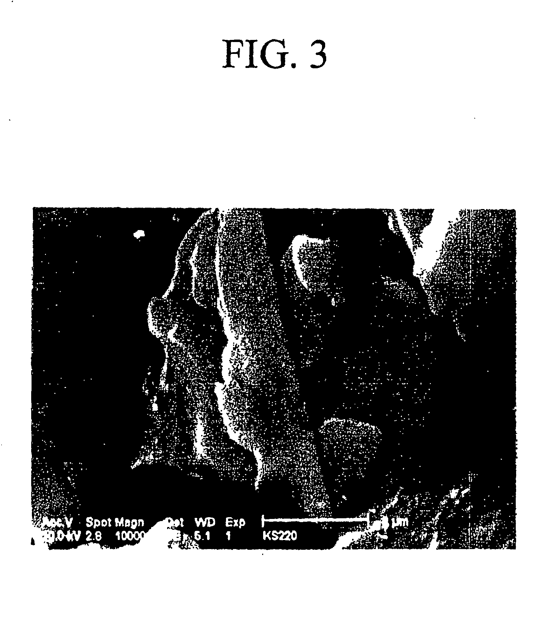

A scanning electron microscopic photograph of the resulting composite particles is shown in Figure 2 (magnification: 3865). Also, a scanning electron microscopic photograph of the raw mica particles is shown in Figure 3 (magnification: 5000). It can be seen from the results shown in Figure 2 that the surface of the composite particles obtained in Example 1 is almost as smooth as the surface of the mica particles.

However, it was found that the composite particles obtained in Example 1 showed water repellency which was not at all exhibited by the mica particles alone. Specifically, the composite particles were pelletized, and a contact angle of the composite particles with water was determined with an angle of contact analyzer commercially available from Kyowa Kaimen Kagaku K.K. As a result, the composite particles had a contact angle of 120°, showing high water repellency. The average particle diameter of the resulting composite particles was determined by a laser diffraction/scattering type particle size distribution analyzer commercially available from Horiba, LTD. As a result, the average particle diameter was found to be 12 µm.

The resulting composite powder was touched with a finger. As a result, the powder had no texture of roughness, and spread well when applied to a skin.

### Example 2

The particles were coated in the same manner as in Example 1, except that 0.8 g of granular 2-(perfluorooctyl)ethyl methacrylate polymer having a particle diameter of 1 to 5 mm was used in place of stearyl methacrylate-2-(perfluorooctyl)ethyl methacrylate copolymer, and 8.0 g of talc having an average particle diameter of 10 µm commercially available from K.K. Yamaguchi Ummo Kogyosho was used in place of mica.

However, no granular substances having a particle diameter of 1 to 5 mm were found in the resulting powdery substance.

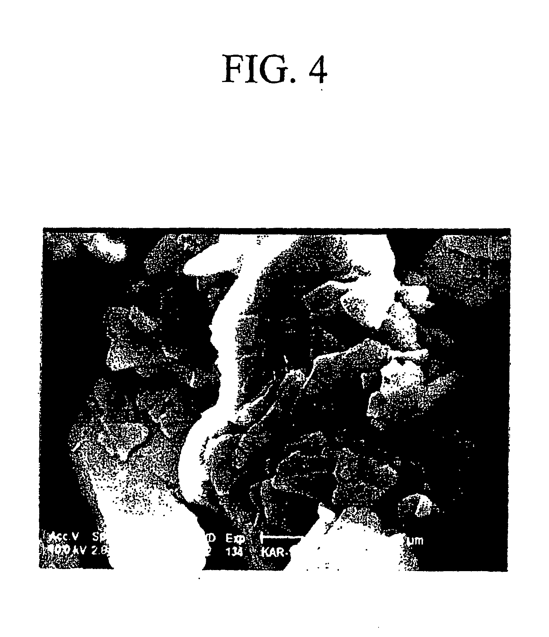

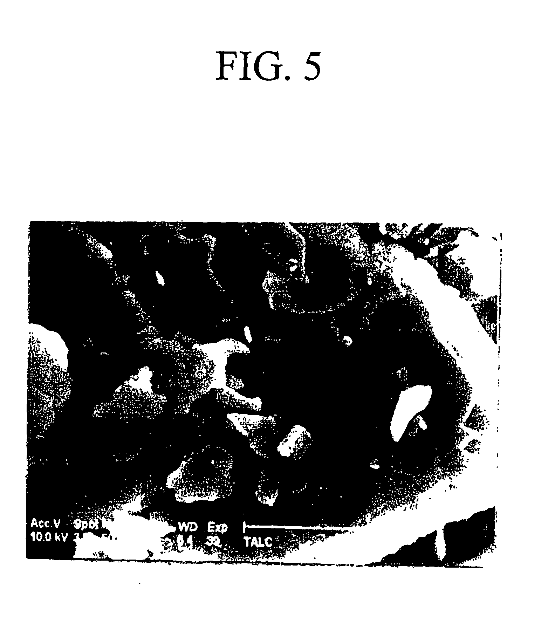

A scanning electron microscopic photograph of the resulting composite particles is shown in Figure 4 (magnification: 5000). Also, a scanning electron microscopic photograph of the raw talc particles before coating is shown in Figure 5 (magnification: 5000). It can be seen from the results shown in Figure 4 that the surface of the composite particles obtained in Example 2 is almost as smooth as the surface of the talc particles before coating.

However, it was found that the composite particles obtained in Example 2 showed water repellency which was not at all exhibited by the talc particles alone. Specifically, the contact angle of the resulting composite particles with water was determined in the same manner as in Example 1. As a result, the composite particles had a contact angle of 115°, showing high water repellency. The average particle diameter of the resulting composite particles was found to be 13 µm.

### Example 3

The particles were coated in the same manner as in Example 1, except that 0.6 g of massive γ-(N-propionylpolyethyleneimino)aminopropyl methyl siloxane / dimethyl siloxane copolymer was used in place of stearyl methacrylate-2-(perfluorooctyl)ethyl methacrylate copolymer, and 6 g of talc was used in place of mica.

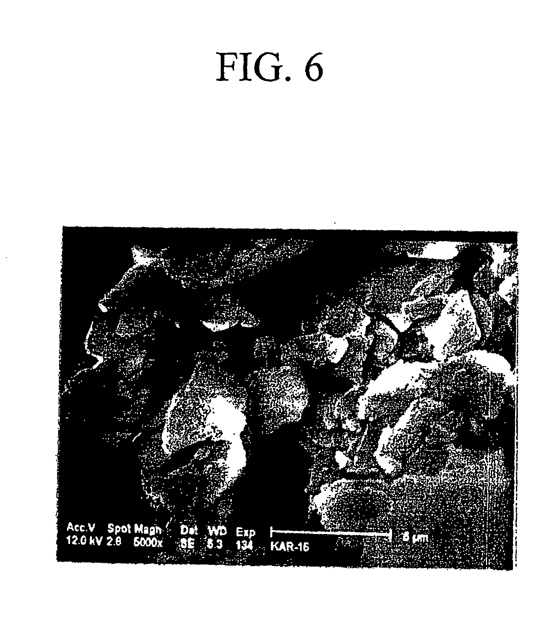

No granular substances having a particle diameter of 1 to 5 mm were found in the resulting powdery composite particles. A scanning electron microscopic photograph of the composite particles is shown in Figure 6 (magnification: 5000). It can be seen from the results shown in Figure 6 that the surface of the composite particles obtained in Example 3 is almost as smooth as the surface of the talc particles before coating (Figure 5).

However, it was found that the composite particles obtained in Example 3 showed water repellency which was not at all exhibited by the talc particles alone. Specifically, the contact angle of the resulting composite particles with water was determined in the same manner as in Example 1. As a result, the composite particles had a contact angle of 115°, showing high water repellency. The average particle diameter of the resulting composite particles was found to be 13 µm.

### Comparative Example 1

The same procedures as in Example 1 were carried out up to the step of rotating a stirrer 13 for 0.5 hours to dissolve and disperse the mixture. Thereafter, an exhaust valve V-2 was opened, and the content of the vessel was discharged from a spray nozzle (not illustrated) having a hole diameter of 0.2 mm of an exhaust line 14 to the outside of the vessel in one second.

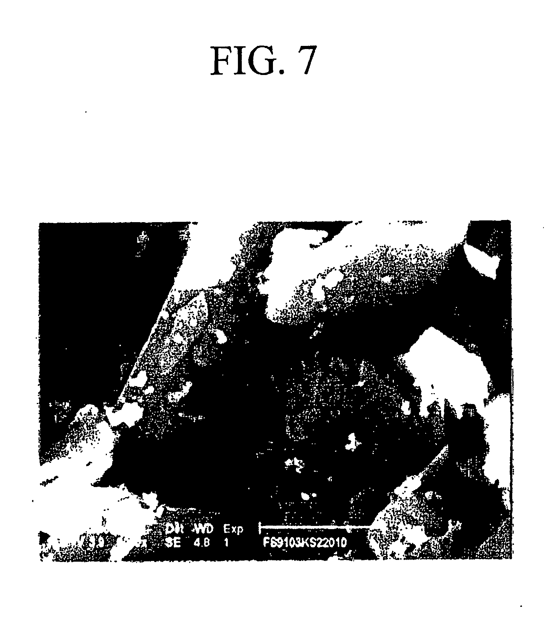

The discharged product was a powdery substance. A scanning electron microscopic photograph of the powdery substance is shown in Figure 7 (magnification: 5000). It can be seen from the results shown in Figure 7 that the powdery substance obtained in Comparative Example 1 is a heterogeneous powder containing fine particles presumably composed of stearyl methacrylate-2-(perfluorooctyl)ethyl methacrylate copolymer (weight ratio of stearyl methacrylate : 2-(perfluorooctyl)ethyl methacrylate = 1:9). The powdery substance is shown in white in the photograph, and has a particle diameter of 0.1 to 1 µm. The average particle diameter of the powdery substance was 11 µm. The contact angle of the powdery substance, i.e. composite particles with water was determined in the same manner as in Example 1. As a result, the composite particles had a contact angle of 120°, showing high water repellency.

The resulting composite powder was touched with a finger. As a result the composite powder had some texture of roughness and did not spread well when applied to a skin, as compared to the composite particles obtained in Example 1, and the particles of the composite powder were aggregated with each other, so that the coating could not be uniformly carried out.

### Example 4

The composite particles were prepared in the same manner as in Example 1, except that 0.36 g of γ-(N-propionylpolyethyleneimino)aminopropyl methyl siloxane / dimethyl siloxane copolymer was used in place of stearyl methacrylate-2-(perfluorooctyl)ethyl methacrylate copolymer, and 6.0 g of talc having an average particle diameter of 10 µm commercially available from K.K. Yamaguchi Ummo Kogyosho and 1.8 g of titanium dioxide having an average particle diameter of 0.2 µm, the surface of which was treated with silicone, commercially available from TAYCA CORPORATION were used in place of mica.

However, no granular substances having a particle diameter of 1 to 5 mm were found in the resulting composite particles.

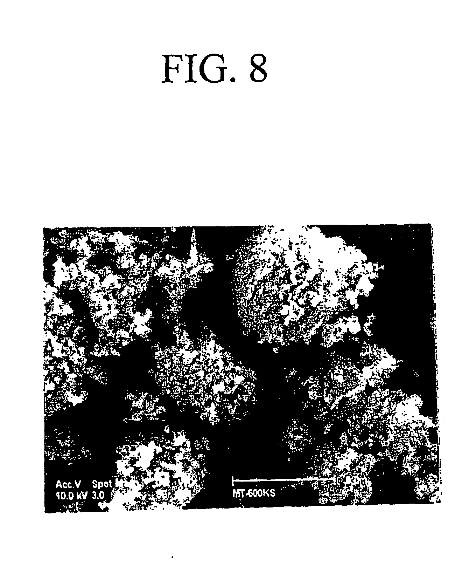

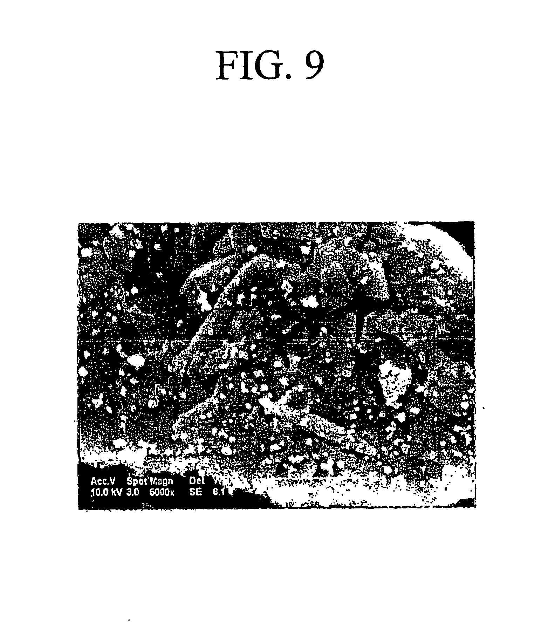

A scanning electron microscopic photograph of the resulting composite particles is shown in Figure 8 (magnification: 25000). Also, a scanning electron microscopic photograph of the resulting composite particles is shown in Figure 9 (magnification: 5000).

It can be seen from the results shown in Figure 9 that the composite particles in which dispersed talc particles and titanium dioxide particles were deposited on the surface of the talc particle. The average particle diameter of the composite particles was found to be 11 µm.

The contact angle of the resulting composite particles with water was determined in the same manner as in Example 1. As a result, the composite particles had a contact angle of 105°, showing high water repellency.

The resulting composite powder was touched with a finger. As a result, the powder had no texture of roughness, and spread well when applied to a skin.

### Example 5

The composite particles were prepared in the same manner as in Example 1, except that the amount of stearyl methacrylate-2-(perfluorooctyl)ethyl methacrylate copolymer (weight ratio of stearyl methacrylate: 2-(perfluorooctyl)ethyl methacrylate = 1:9) was changed to 0.36 g, and 6.0 g of talc having an average particle diameter of 10 µm commercially available from K.K. Yamaguchi Ummo Kogyosho and 1.8 g of titanium dioxide having an average particle diameter of 0.7 µm commercially available from ISHIHARA SANGYO KAISHA, LTD. were used in place of mica.

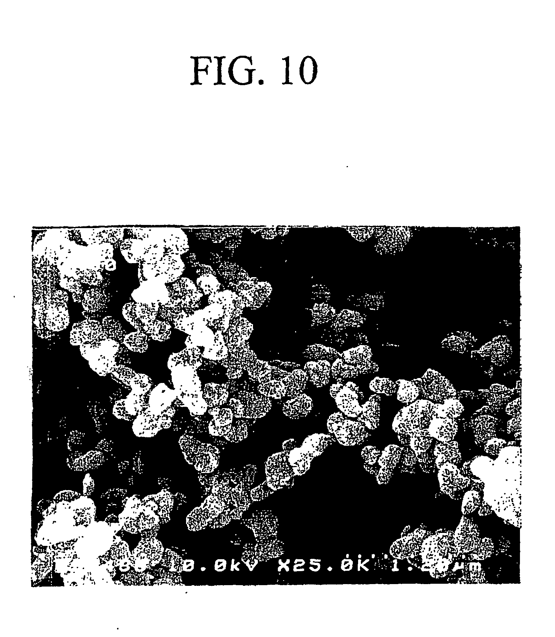

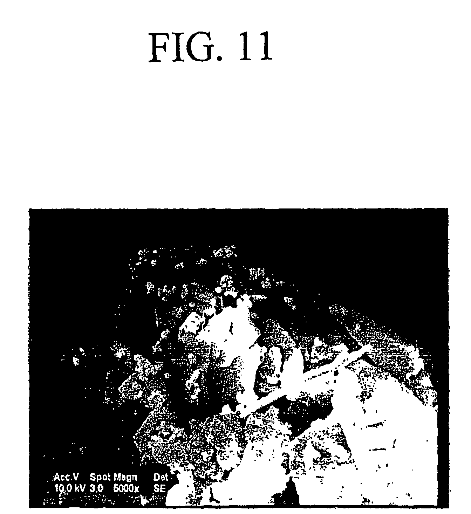

No raw organic compounds and no aggregates were found in the resulting composite particles. Scanning electron microscopic photographs of the raw titanium dioxide and the resulting composite particles are shown in Figures 10 and 11, respectively (each magnification: 5000).

It can be seen from the results shown in Figure 11 that the titanium dioxide particles are existing on the surface of the composite particles obtained in Example 5. The average particle diameter of the composite particles was found to be 12 µm.

The contact angle of the resulting composite particles with water was determined in the same manner as in Example 1. As a result, the composite particles had a contact angle of 100°, showing high water repellency.

The resulting composite particles were touched with a finger. As a result, the powder had no texture of roughness and spread well when applied to a skin.

### Comparative Example 2

A 500 mL flask was charged with 0.25 g of γ-(N-propionylpolyethyleneimino)aminopropyl methyl siloxane / dimethyl siloxane copolymer, and thereafter charged with 190 g of ethanol. The resulting mixture was stirred for 25°C to dissolve the γ-(N-propionylpolyethyleneimino)aminopropyl methyl siloxane / dimethyl siloxane copolymer. Thereafter, 7.5 g of talc having an average particle diameter of 10 µm commercially available from K.K. Yamaguchi Ummo Kogyosho, and 2.25 g of titanium dioxide having an average particle diameter of 0.2 µm, the surface of which was treated with silicone, commercially available from TAYCA CORPORATION were added thereto. Subsequently, ethanol was distilled by evaporation with stirring at 55°C under 7 kPa. Many deposits were observed on the inner wall of the flask, and aggregates of composite particles were obtained.

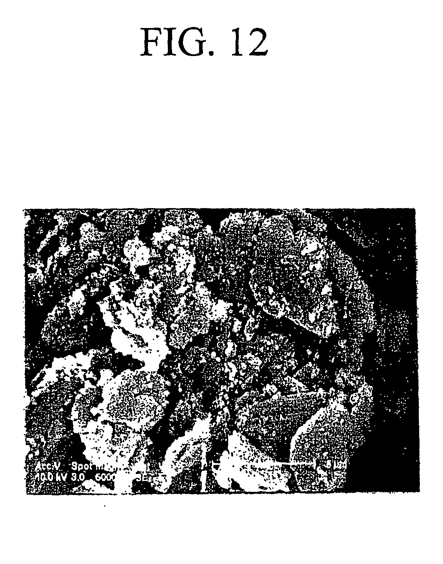

A scanning electron microscopic photograph of the resulting composite particles are shown in Figure 12 (magnification: 5000). As a result, it was observed that the titanium dioxide particles were aggregated on the surface of the talc particles.

The particles obtained by pulverizing the composite particles with a coffee mill were touched with a finger. As a result, the particles had slight texture of roughness, and did not spread well when applied to a skin.

According to the present invention, there is exhibited an effect that composite particles containing no particles of by-products made of the organic compound can be obtained by a simple preparation process without using any organic solvent harmful to human bodies.

## Claims

1. A process for preparing composite particles comprising particles and an organic compound in a vessel, comprising the steps of:
(a) contacting particles, which are not substantially dissolved in supercritical carbon dioxide, with an organic compound, which is dissolvable in supercritical carbon dioxide, in the presence of supercritical carbon dioxide in the vessel; and
(b) reducing the internal pressure of the vessel, by exhausting carbon dioxide from the vessel to obtain composite particles within the vessel wherein the internal temperature of the vessel is not less than the critical temperature of carbon dioxide, when the internal pressure is reduced after the particles are contacted with the organic compound in the presence of supercritical carbon dioxide in the vessel.

2. The process according to claim 1, wherein the organic compound is a polymer.

3. The process according to claim 2, wherein the polymer is at least one compound selected from the group consisting of fluorine-containing polymers and silicone polymers.

4. The process according to claim 3, wherein the fluorine-containing polymer is at least one compound selected from the group consisting of a (meth)acrylate polymer having a fluoroalkyl group, a (meth)acrylate polymer having a perfluoroalkyl group, a (meth)acrylate having a fluoroalkyl group-long chain alkyl (meth)acrylate copolymer, and a (meth)acrylate having a perfluoroalkyl group-long chain alkyl (meth)acrylate copolymer

5. The process according to claim 3, wherein the content of fluorine atom in the fluorine-containing polymer is 9 to 80% by weight

6. The process according to claim 3, wherein the silicone polymer comprises an organopolysiloxane molecular chain and a poly(N-acylalkyleneimine) molecular chain having a repeating unit represented by the formula (III): 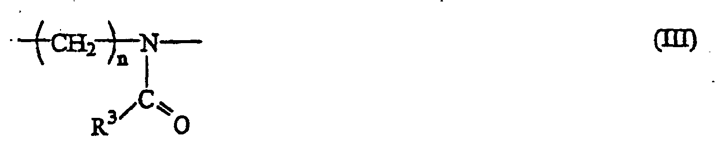 wherein R³ is hydrogen atom, an alkyl group having 1 to 22 carbon atoms, a cycloalkyl group having 3 to 8 carbon atoms, an aralkyl group having 7 to 10 carbon atoms or an aryl group having 6 to 10 carbon atoms; and n is 2 or 3, in which the poly(N-acylalkyleneimine) molecular chain is bonded to at least one of the end and the side chain of the organopolysiloxane molecular chain via a group represented by the formula (I): 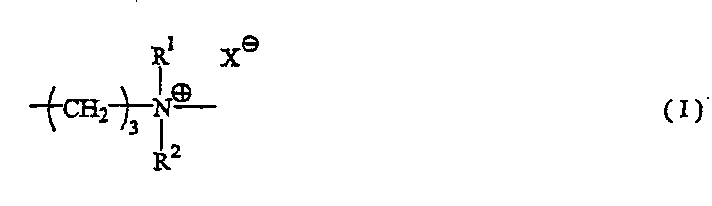 wherein each of R¹ and R² is independently hydrogen atom, an alkyl group having 1 to 18 carbon atoms or an aryl group having 6 to 10 carbon atoms; X⁻ is a counter ion of a quaternary ammonium salt; or a group represented by the formula (II): 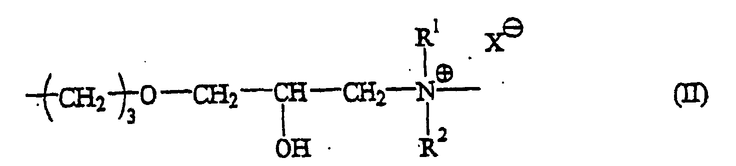 wherein, R¹, R² and X⁻ are the same as defined above,
and the weight ratio of the poly(N-acylalkyleneimine) molecular chain / the organopolysiloxane molecular chain is 1/50 to 50/1.

7. The process according to claim 1, wherein the amount of the particles contained in the composite particles is 0.7 to 500 parts by weight, based on 1 part by weight of the organic compound.

8. The process according to claim 1, comprising (a) contacting particles with an organic compound in the presence of supercritical carbon dioxide in the vessel; and (b) reducing the internal pressure of the vessel, wherein particles A, at least one of particles B having an average particle diameter of 1/5 or less times as large as the average particle diameter of the particles A, and the organic compounds are contacted with each other in the presence of supercritical carbon dioxide in the vessel, and the supercritical carbon dioxide is removed from the resulting mixture to deposit the particles B and the organic compound on the surface of the particles A.

## Patentansprüche

1. Verfahren zur Erzeugung von Verbundteilchen, umfassend Teilchen und eine organische Verbindung in einem Behälter, umfassend die folgenden Schritte:
(a) Kontaktieren von Teilchen, die im Wesentlichen nicht in superkritischem Kohlendioxid aufgelöst sind, mit einer organischen Verbindung, die in superkritischem Kohlendioxid löslich ist, in der Gegenwart von superkritischem Kohlendioxid in dem Behälter; und
(b) Reduzieren des Innendrucks des Behälters durch Ablassen von Kohlendioxid von dem Behälter, unter Erhalt von Verbundteilchen innerhalb des Behälters, worin die Innentemperatur des Behälters nicht niedriger ist als die kritische Temperatur von Kohlendioxid, worin der Innendruck reduziert wird, nachdem die Teilchen mit der organischen Verbindung in der Gegenwart von superkritischem Kohlendioxid im Behälter kontaktiert sind.

2. Verfahren nach Anspruch 1, worin die organische Verbindung ein Polymer ist.

3. Verfahren nach Anspruch 2, worin das Polymer zumindest eine Verbindung ist, ausgewählt aus der Gruppe, bestehend aus fluorhaltigen Polymeren und Siliconpolymeren.

4. Verfahren nach Anspruch 3, worin das fluorhaltige Polymer zumindest eine Verbindung ist, ausgewählt aus der Gruppe, bestehend aus einem (Meth)acrylatpolymer mit einer Fluoralkylgruppe, einem (Meth)acrylatpolymer mit einer Perfluoralkylgruppe, einem (Meth)acrylat mit einem Fluoralkylgruppen-langkettigen Alkyl(meth)acrylatcopolymer und einem (Meth)acrylat mit einem Perfluoralkylgruppen-langkettigen Alkyl (meth) acrylatcopolymer.

5. Verfahren nach Anspruch 3, worin der Gehalt an Fluoratomen in dem fluorhaltigen Polymer 9 bis 80 Gew.-% ist.

6. Verfahren nach Anspruch 3, worin das Siliconpolymer eine Organopolysiloxanmolekülkette und eine Poly(N-acylalkylenimin)-Molekülkette mit einer Wiederholungseinheit mit der Formel (III): 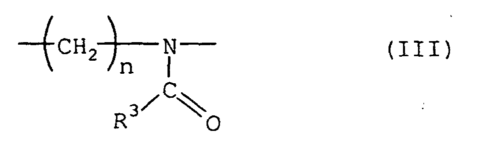 worin R³ ein Wasserstoffatom, eine Alkylgrupppe mit 1 bis 22 Kohlenstoffatomen, Cycloalkylgruppe mit 3 bis 8 Kohlenstoffatomen, Aralkylgruppe mit 7 bis 10 Kohlenstoffatomen oder Arylgruppe mit 6 bis 10 Kohlenstoffatomen ist, und n 2 oder 3 ist, worin die Poly(N-acylalkylenimin)-Molekülkette an zumindest eines von dem Ende und der Seitenkette der Organopolysiloxanmolekülkette über eine Gruppe gebunden ist, dargestellt durch die Formel (I): 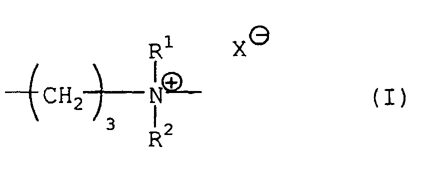 worin R¹ und R² jeweils unabhängig Wasserstoffatom, eine Alkylgruppe mit 1 bis 18 Kohlenstoffatomen oder Arylgruppe mit 6 bis 10 Kohlenstoffatomen sind, X⁻ ein Gegenion eines quaternären Ammoniumsalzes ist; oder eine Gruppe, dargestellt durch die Formel (II) umfasst: 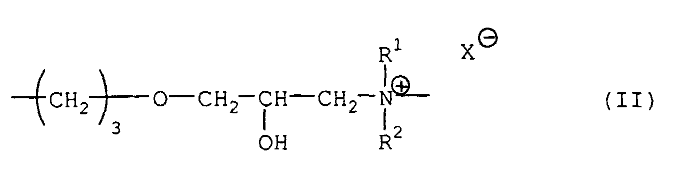 worin R¹, R² und X⁻ gleich sind wie oben definiert, und worin das Gewichtsverhältnis der Poly(N-acylalkylenimin)-Molekülkette/Organopolysiloxanmolekülkette 1/50 bis 50/1 ist.

7. Verfahren nach Anspruch 1, worin die Menge der Teilchen, die in den Verbundteilchen enthalten sind, 0,7 bis 500 Gewichtsteile, bezogen auf ein Gewichtsteil der organischen Verbindung ist.

8. Verfahren nach Anspruch 1, umfassend (a) das Kontaktieren der Teilchen mit einer organischen Verbindung in der Gegenwart von superkritischem Kohlendioxid im Behälter; und (b) Reduzieren des Innendrucks des Behälters, worin Teilchen A, zumindest eines von den Teilchen B mit einem durchschnittlichen Teilchendurchmesser von 1/5 oder weniger des durchschnittlichen Durchmessers der Teilchen A und den organischen Verbindungen miteinander in superkritischem Kohlendioxid in dem Behälter kontaktiert werden und das superkritische Kohlendioxid von der resultierenden Mischung entfernt wird, zum Niederschlagen der Teilchen B und der organischen Verbindung auf die Oberfläche der Teilchen A.

## Revendications

1. Procédé de préparation de particules composites comprenant des particules et un composé organique dans un récipient, comprenant les étapes consistant à :
(a) mettre en contact des particules, qui ne sont pas essentiellement dissoutes dans du dioxyde de carbone super-critique, avec un composé organique, qui peut être dissous dans du dioxyde de carbone super-critique, en présence de dioxyde de carbone super-critique dans le récipient ; et
(b) réduire la pression interne du récipient, en éliminant le dioxyde de carbone du récipient pour obtenir des particules composites dans le récipient dans lequel la température intérieure du récipient est non inférieure à la température critique du dioxyde de carbone, lorsque la pression interne est réduite après que les particules soient mises en contact avec le composé organique en présence de dioxyde de carbone super-critique dans le récipient.

2. Procédé selon la revendication 1, dans lequel le composé organique est un polymère.

3. Procédé selon la revendication 2, dans lequel le polymère est au moins un composé choisi dans le groupe constitué par les polymères contenant du fluor et les polymères de silicone.

4. Procédé selon la revendication 3, dans lequel le polymère contenant du fluor est au moins un composé choisi dans le groupe constitué par un polymère de (méth)acrylate contenant un groupe fluoroalkyle, un polymère de (méth)acrylate contenant un groupe perfluoroalkyle, un (méth)acrylate contenant un copolymère de (méth)acrylate d'alkyle à chaîne longue à groupe fluoroalkyle, et un (méth)acrylate contenant un copolymère de (méth)acrylate d'alkyle à chaîne longue à groupe perfluoroalkyle.

5. Procédé selon la revendication 3, dans lequel la teneur en atomes de fluor du polymère contenant du fluor est de 9 à 80 % en poids.

6. Procédé selon la revendication 3, dans lequel le polymère de silicone comprend une chaîne moléculaire d'organopolysiloxane et une chaîne moléculaire poly(N-acylalkylèneimine) comprenant un motif récurrent représenté par la formule (III) : 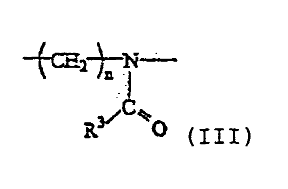 dans laquelle R³ est un atome d'hydrogène, un groupe alkyle comportant 1 à 22 atomes de carbone, un groupe cycloalkyle comportant 3 à 8 atomes de carbone, un groupe aralkyle comportant 7 à 10 atomes de carbone ou un groupe aryle comportant 6 à 10 atomes de carbone ; n vaut 2 ou 3, dans lequel la chaîne moléculaire de poly(N-acylalkylèneimine) est liée à au moins une de l'extrémité et de la chaîne latérale de la chaîne moléculaire d'organopolysiloxane par l'intermédiaire d'un groupe représenté par la formule (I) : 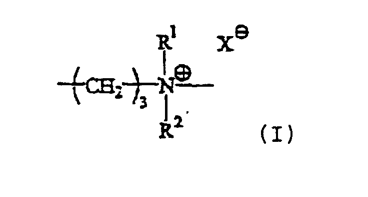 dans laquelle chacun de R¹ et R² est indépendamment un atome d'hydrogène, un groupe alkyle comportant 1 à 18 atomes de carbone ou un groupe aryle comportant 6 à 10 atomes de carbone ; X⁻ est un contre-ion d'un sel d'ammonium quaternaire ; ou un groupe représenté par la formule (II) : 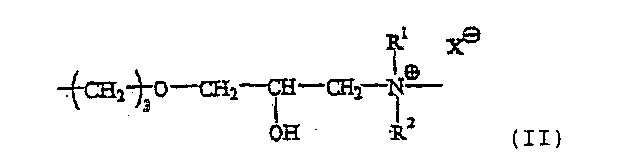 dans laquelle R¹, R² et X⁻ sont tels que définis ci-dessus,
et le rapport en poids de la chaîne moléculaire de poly(N-acylalkylèneimine)/la chaîne moléculaire d'organopolysiloxane est de 1/50 à 50/1.

7. Procédé selon la revendication 1, dans lequel la quantité de particules contenues dans les particules composites est de 0,7 à 500 parties en poids, par rapport à 1 partie en poids du composé organique.

8. Procédé selon la revendication 1, comprenant (a) la mise en contact des particules avec un composé organique en présence de dioxyde de carbone super-critique dans le récipient ; et (b) la réduction de la pression interne du récipient, dans lequel les particules A, au moins une des particules B ayant un diamètre moyen des particules égal à 1/5 ou moins du diamètre moyen des particules des particules A, et les composés organiques sont mis en contact les uns avec les autres en présence de dioxyde de carbone super-critique dans le récipient, et le dioxyde de carbone super-critique est éliminé du mélange résultant de façon à déposer les particules B et le composé organique sur la surface des particules A.
